(19) Europäisches Patentamt / European Patent Office / Office européen des brevets

(11) **EP 2 523 160 A1**

(12) **EUROPEAN PATENT APPLICATION**

(43) Date of publication:
**14.11.2012 Bulletin 2012/46**

(51) Int Cl.:
*G06T 3/40* (2006.01)   *G06T 5/00* (2006.01)

(21) Application number: **12166897.4**

(22) Date of filing: **04.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.05.2011 JP 2011108048**

(71) Applicant: **Sony Corporation Tokyo 108-0075 (JP)**

(72) Inventor: **Nomura, Yoshikuni Minato-ku, Tokyo (JP)**

(74) Representative: **Scaddan, Gareth Casey D Young & Co LLP 120 Holborn London EC1N 2DY (GB)**

(54) **Image processing device, image processing method, and program**

(57)   A mosaic image is input that is made up of a visible light component image in which mainly a visible light component has been captured and a non-visible light component image in which mainly a non-visible light component has been captured, and spectrally corrected images are generated in which spectral characteristics of each pixel have been corrected. Contrast enhancement processing is then performed on one of the spectrally corrected images that has been generated and that includes the non-visible light component, and a non-visible light component image is generated in which contrast has been enhanced. A spectral correction portion generates the spectrally corrected images by performing a matrix computation that uses a spectral characteristics correction matrix M that is generated using information on ideal spectral characteristics.

FIG. 1

EP 2 523 160 A1

**Description**

The present disclosure relates to an image processing device, an image processing method, and a program. In particular, embodiments of the present disclosure relate to an image processing device, an image processing method, and a program that capture images of visible light and non-visible light.

For example, the present disclosure relates to an image processing device, an image processing method, and a program that can be used for processing that detects a non-visible light pattern with high contrast when a pattern projection technique is being implemented that measures a three-dimensional shape of a subject by projecting a non-visible light pattern onto it.

A technology is known that, in combination with visible light image capture for producing an image, captures a non-visible light component image by projecting non-visible light, such as infrared light or the like, for example, and makes it possible, by using the captured non-visible light image, to perform image analysis of the captured image, such as measurement of the distance to a subject that is included in the captured image.

For example, in Japanese Patent Application Publication No. JP-A 2005-258622 and Japanese Patent Application Publication No. JP-A 2003-185412, an image capture device is proposed that captures images of visible light and non-visible light at the same time.

Japanese Patent Application Publication No. JP-A 2005-258622 and Japanese Patent Application Publication No. JP-A 2003-185412 disclose a three-dimensional shape measurement processing technique that projects a non-visible light pattern onto a subject, acquires the pattern as a captured non-visible light image, and uses a pattern projection method to measure the distance to the subject.

In Japanese Patent Application Publication No. JP-A 2005-258622 and Japanese Patent Application Publication No. JP-A 2003-185412, a configuration is used in which pixels for capturing visible light and pixels for capturing non-visible light are set in the image capture device, and a visible light component image and a non-visible light component image are captured in the respective pixels, but it is implicitly assumed that the spectral characteristics of the visible light capturing pixels and the non-visible light capturing pixels are the ideal characteristics.

However, it is actually difficult to achieve the ideal spectral characteristics in the visible light capturing pixels and the non-visible light capturing pixels.

One technique for setting the visible light capturing pixels and the non-visible light capturing pixels in the image capture device is a method that sets a color filter that transmits light of a specific wavelength for each of the pixels, for example. However, there are limits to the spectral performance of the color filters that can be manufactured, and it is difficult to prevent the intermixing of photons in the form of light that leaks through from adjacent pixels of different colors.

This means that non-visible light such as infrared light or the like mixes into the visible light capturing pixels and that visible light of the wavelengths that are equivalent to RGB mixes into the non-visible light capturing pixels. The phenomenon of a given color becoming mixed into another color due various sorts of causes like this is called color mixing.

The fact that the ideal spectral characteristics are not achieved is due to the mixing of a visible light component into the projected pattern of the non-visible light that is captured, which means that only a projected pattern with low contrast can be produced. Even if the three-dimensional shape measurement is done based on the low contrast projected pattern, it is not possible to obtain accurate distance information and an accurate shape of the subject.

Therefore, a problem exists with the known technology in that, when the image capture device that captures the visible light and the non-visible light at the same time is used, an adequate spectrum is not produced in the visible light capturing pixels and the non-visible light capturing pixels, which means that image analysis such as the measurement of the distance to the subject and the three-dimensional shape of the subject, for example, cannot be performed accurately.

Various respective aspects and features of the invention are defined in the appended claims. Combinations of features from the dependent claims may be combined with features of the independent claims as appropriate and not merely as explicitly set out in the claims.

In light of the problem that is described above, the present disclosure provides an image processing device, an image processing method, and a program that implement processing that separates visible light and non-visible light with high precision.

An example of the present disclosure provides an image processing device, an image processing method, and a program that, by implementing the processing that separates visible light and non-visible light with high precision, are capable of more accurately performing image analysis based on the captured non-visible light image, such as measuring information on the distance to a subject, measuring the three-dimensional shape of the subject, and the like, for example.

According to a first embodiment of the present disclosure, there is provided an image processing device, including a spectral correction portion that inputs a mosaic image that is made up of a visible light component pixel in which mainly a visible light component has been captured and a non-visible light component pixel in which mainly a non-visible light component has been captured, and that generates spectrally corrected images in which spectral characteristics of each pixel have been corrected, and a contrast enhancement portion that performs contrast enhancement processing on one of the spectrally corrected images that has been generated by the spectral correction portion and that includes the non-visible light component, and that generates a non-visible light component image in which contrast has been enhanced.

According to an embodiment of the image processing device of the present disclosure, the image processing device further includes an interpolation portion that performs interpolation processing on the mosaic image and generates an interpolated image in which a visible light component pixel value and a non-visible light component pixel value have been set for each pixel position. The spectral correction portion generates a spectrally corrected image in which the pixel values of the interpolated image that has been generated by the interpolation portion have been corrected.

According to an embodiment of the image processing device of the present disclosure, the spectral correction portion generates the spectrally corrected image in which the pixel values of the interpolated image that has been generated by the interpolation portion have been corrected, by performing a matrix computation that uses a spectral characteristics correction matrix.

According to an embodiment of the image processing device of the present disclosure, the spectral correction portion performs the matrix computation by computing the spectral characteristics correction matrix such that when an actual spectral characteristics matrix, whose elements are spectral transmittances that correspond to the spectral characteristics of an image capture device that captured the mosaic image, is multiplied by the spectral characteristics correction matrix, the resulting product will be closer to an ideal spectral characteristics matrix, whose elements are spectral transmittances that correspond to ideal spectral characteristics, than is the actual spectral characteristics matrix.

According to an embodiment of the image processing device of the present disclosure, the contrast enhancement portion, with respect to the one of the spectrally corrected images that has been generated by the spectral correction portion and that includes the non-visible light component, performs processing that compresses a global luminance component and enhances a contrast component.

According to an embodiment of the image processing device of the present disclosure, the contrast enhancement portion performs edge enhancement processing with respect to the one of the spectrally corrected images that has been generated by the spectral correction portion and that includes the non-visible light component.

According to an embodiment of the image processing device of the present disclosure, the contrast enhancement portion, with respect to the one of the spectrally corrected images that has been generated by the spectral correction portion and that includes the non-visible light component, performs the contrast enhancement processing using a tone curve.

According to a second embodiment of the present disclosure, there is provided an image capture apparatus, including an image capture device that includes a single panel color image capture element that generates a mosaic image that is made up of a visible light component pixel in which mainly a visible light component has been captured and a non-visible light component pixel in which mainly a non-visible light component has been captured, a spectral correction portion that inputs the mosaic image that the image capture device has generated, and that generates spectrally corrected images in which spectral characteristics of each pixel have been corrected, and a contrast enhancement portion that performs contrast enhancement processing on one of the spectrally corrected images that has been generated by the spectral correction portion and that includes the non-visible light component, and that generates a non-visible light component image in which contrast has been enhanced.

According to a third embodiment of the present disclosure, there is provided an image processing method that is implemented in an image capture apparatus, including inputting a mosaic image that is made up of a visible light component pixel in which mainly a visible light component has been captured and a non-visible light component pixel in which mainly a non-visible light component has been captured, and generating spectrally corrected images in which spectral characteristics of each pixel have been corrected, and performing contrast enhancement processing on one of the spectrally corrected images that has been generated and that includes the non-visible light component, and generating a non-visible light component image in which contrast has been enhanced.

According to a fourth embodiment of the present disclosure, there is provided a program that causes image processing to be performed in an image processing device, the program including inputting a mosaic image that is made up of a visible light component pixel in which mainly a visible light component has been captured and a non-visible light component pixel in which mainly a non-visible light component has been captured, and generating spectrally corrected images in which spectral characteristics of each pixel have been corrected, and performing contrast enhancement processing on one of the spectrally corrected images that has been generated and that includes the non-visible light component, and generating a non-visible light component image in which contrast has been enhanced.

Note that the program in accordance with the present disclosure is a program that can be provided to an information processing device or a computer system that can execute various program codes, for example, by means of a storage medium provided in a computer-readable format or a communication medium. When such a program is provided in a computer-readable format, a process in accordance with the program is implemented on the information processing device or the computer system.

Further objects, features, and advantages of the present disclosure will become apparent from the following embodiments of the present disclosure and the detailed description made based on the accompanying drawings. In addition, the system in this specification is a logical collection configuration of a plurality of devices, and need not be the one in which a device with each configuration is accommodated within a single housing.

According to the configuration of the example of the present disclosure, a configuration is implemented that improves the spectral characteristics of the visible light and the non-visible light and that generates the non-visible light component image with only a small visible light component.

Specifically, a mosaic image is input that is made up of a visible light component pixel in which mainly the visible light component has been captured and a non-visible light component pixel in which mainly the non-visible light component has been captured, and spectrally corrected images are generated in which the spectral characteristics of each pixel have been corrected. Next, the contrast enhancement processing is performed on the generated spectrally corrected image that is made up of the non-visible light component, and the non-visible light component image is generated in which the contrast has been enhanced. The spectral correction portion generates the spectrally corrected image by performing the matrix computation that uses the spectral characteristics correction matrix M that is generated using information on the ideal spectral characteristics.

This configuration makes it possible to generate the non-visible light component image with only a small visible light component and also makes it possible to perform higher precision processing in a configuration that uses the projecting of a light pattern that uses a non-visible light component such as infrared light or the like, for example, to measure the distance to a subject and the shape of the subject.

Embodiments of the invention will now be described with reference to the accompanying drawings, throughout which like parts are referred to by like references, and in which:

FIG. 1 is a figure that explains an example of a configuration of an image processing device according to the present disclosure;
FIG. 2 is a figure that shows an example of a color filter that is set in an image capture device;
FIG. 3 is a figure that shows examples of ideal spectral characteristics of an image capture device in which a filter that has the color array in FIG. 2 is provided;
FIG. 4 is a figure that explains an example of the spectral characteristics of an image capture device that is actually manufactured as the image capture device in which the filter that has the color array in FIG. 2 is provided;
FIG. 5 is a figure that explains an example of a configuration of an image processing portion that performs processing that generates a visible light component image (an RGB image) and a non-visible light component image (an IR image);
FIG. 6 is a figure that shows an example of a detailed configuration of an interpolation portion;
FIG. 7 is a figure that explains an example of processing that computes a luminance signal Y;
FIG. 8 is a figure that shows an example of a detailed configuration of a contrast enhancement portion;
FIG. 9 is a figure that explains processing that a tone curve application portion performs; and
FIG. 10 is a figure that shows a flowchart that explains a processing sequence that the image processing portion performs.

Hereinafter, example embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Hereinafter, an image processing device, an image processing method, and a program according to the present disclosure will be explained in detail with reference to the drawings. Note that the explanation will cover the items below in order.

1. Example of a configuration of the image processing device
2. Example of a configuration of an image capture device
3. Details of image processing

(3-1) Entire sequence of the image processing
(3-2) Details of individual processes in the image processing
(3-2-1) Processing of an interpolation portion
(3-2-2) Processing of a spectral correction portion
(3-2-3) Processing of a contrast enhancement portion

4. Image processing sequence
5. Other examples
6. Summary of the configurations of the present disclosure

1. Example of a configuration of the image processing device

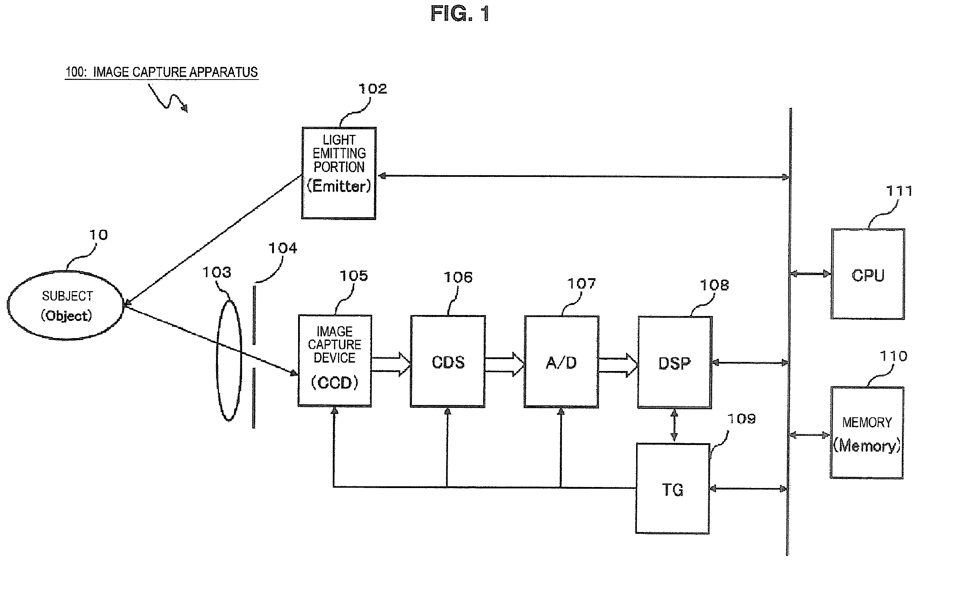

First, an example of a configuration of the image processing device according to the present disclosure will be explained with reference to FIG. 1.

FIG. 1 is a figure that shows an example of a configuration of an image capture apparatus that is an example of the image processing device according to the present disclosure.

FIG. 1 is a block diagram that shows a configuration of an image capture apparatus 100 that performs three-dimensional measurement using non-visible light and performs visible light image capture at the same time.

As shown in FIG. 1, the image capture apparatus 100 includes a light emitting portion (emitter) 102, a lens 103, a diaphragm 104, an image capture device 105, a correlated double sampling (CDS) circuit 106, an A/D converter 107, a digital signal processor (DSP) block 108, a timing generator (TG) 109, a memory 110, and a CPU 111.

The DSP block 108 is a block that has a processor for signal processing and RAM for images. The processor for signal processing is able to perform pre-programmed image processing with respect to image data that are stored in the RAM for images. Hereinafter, the DSP block 108 will be called simply the DSP.

The light emitting portion (emitter) 102 includes a laser and an optical projection system, and it projects a non-visible light pattern for three-dimensional measurement onto a subject (object) 10. The light emitting portion (emitter) 102 emits a pattern, such as a striped pattern, for example, of light that is made up of light such as infrared light, ultraviolet light, or the like, for example, with wavelengths that are outside the wavelengths of the visible light region

The non-visible light pattern that the light emitting portion (emitter) 102 emits is reflected by the subject 10, passes through the lens 103 and the diaphragm 104, and arrives at the image capture device 105, which is configured from a CCD or the like, for example. The reflected light arrives at individual light receiving elements on an image capture surface of the image capture device 105 and is converted into electrical signals by photoelectric conversion in the light receiving elements. Noise removal is performed by the correlated double sampling (CDS) circuit 106, and after the signals are converted into digital data by the A/D converter 107, that is, digitized, they are stored in an image memory in the DSP block 108.

The DSP block 108 performs signal processing on the image signals that are stored in the image memory in the DSP block 108.

The timing generator (TG) 109 performs control of a signal processing system such that image acquisition at a fixed frame rate is maintained while the image capture apparatus 100 is in a state of performing image capture. A stream of pixels is also sent at a fixed rate to the DSP block 108, where the appropriate image processing is performed. From the DSP block 108, visible light and non-visible light images are output and stored in the memory 110. A non-visible light component image that is output from the DSP block 108 is processed further by the CPU 111, where a three-dimensional shape of the subject is computed, for example.

A general explanation of the image capture apparatus 100 in the present example has been provided.

2. Example of a configuration of the image capture device 105

Next, an example of the configuration of the image capture device 105 of the image capture apparatus 100 that is shown in FIG. 1 and its characteristics will be explained in detail.

The image capture device 105 of the image capture apparatus 100 that is shown in FIG. 1 includes, for example, a single panel color image capture element that can capture visible light and non-visible light at the same time.

The DSP block 108 performs processing on a visible light component image and a non-visible light component image that have been captured by the image capture device 105 that includes the single panel color image capture element and generates a high quality non-visible light component image with a high spectrum level.

The specific processing that is performed in the DSP block 108 will be described later, but the image processing device according to the present disclosure is a technology that can be used for processing that detects a non-visible light pattern with high contrast when a pattern projection technique is being implemented that measures the three-dimensional shape of the subject by projecting a non-visible light pattern onto it, for example. Note that in the present specification, the term "contrast" is used to mean a difference in luminance between an object image region and another image region.

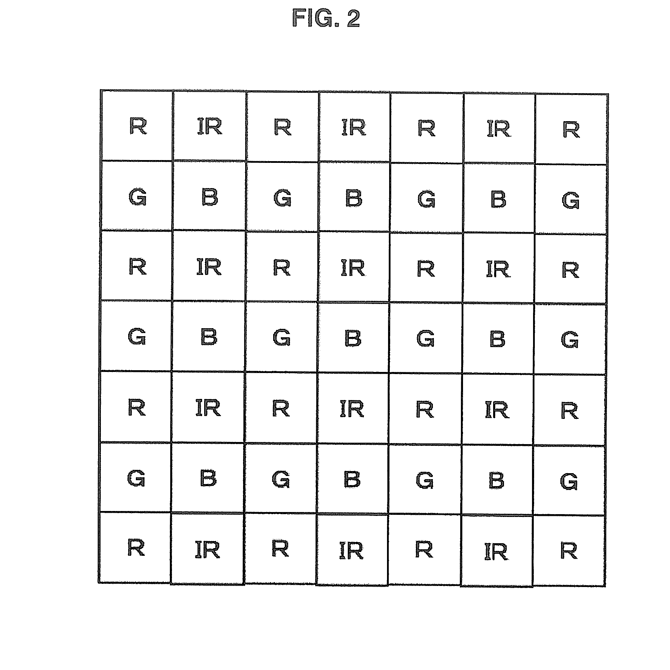

The image capture device 105 of the image capture apparatus 100 that is shown in FIG. 1 includes the single panel color image capture element that has pixels that have sensitivity to visible light and pixels that have sensitivity to non-visible light. This sort of image capture element can be made by forming, on top of a monochrome image capture element, a color filter with a color array like that shown in FIG. 2.

The R's, G's, and B's in FIG. 2 form a color filter for capturing visible light, while the IR's form a color filter for capturing non-visible light.

The R's, G's, and B's transmit light at the wavelengths that correspond to visible light (R, G, B).

The IR's transmit light at the wavelengths that correspond to non-visible light (IR) outside the visible light region, such as infrared light, ultraviolet light, and the like, for example.

The light that is reflected off of the subject 10 enters the image capture device 105 of the image capture apparatus 100 that is shown in FIG. 1 through the color filter that is shown in FIG. 2, for example. The pixels that have been set to R, G, and B therefore become visible light capturing pixels that generate electrical signals in accordance with the wavelengths of light that correspond to visible light (R, G, B). Furthermore, the pixels that have been set to IR become non-visible light capturing pixels that generate electrical signals in accordance with the wavelengths of light that correspond to non-visible light (IR).

Note that a configuration that creates the sensitivities (R, G, B, IR) that correspond to the individual pixels may also be achieved by using a color filter with a plurality of layers instead of using a color filter with only one layer, like that shown in FIG. 2.

Note that the array of the color filter that is shown in FIG. 2 is merely one example, the present disclosure is not limited to the configuration that is shown in FIG. 2, and the processing according to the present disclosure can be used with any configuration that has a mixture of image capture pixels for visible light and non-visible light.

The IR's in the filter that is shown in FIG. 2 may be set such that they transmit light at the wavelengths that correspond to non-visible light outside the visible light region, such as infrared light, ultraviolet light, and the like, but in the example that will hereinafter be explained, the IR's are configured such that they transmit infrared light.

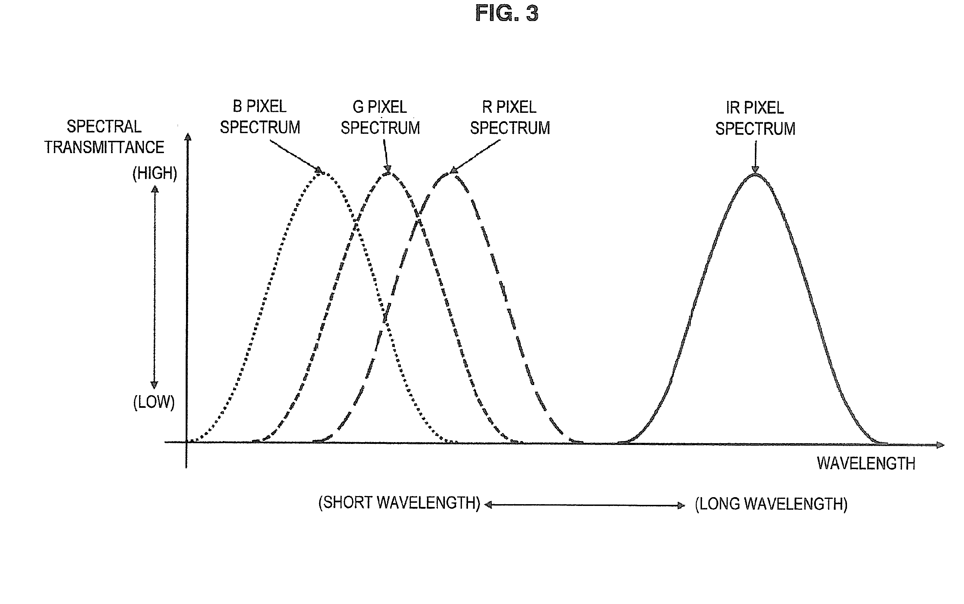

FIG. 3 is a figure that shows examples of ideal spectral transmittance of an image capture device in which a filter that has the color array in FIG. 2 is provided.

The horizontal axis is the wavelength, and the vertical axis is the spectral transmittance.

The B pixel spectrum is the spectral characteristic (the spectral transmittance) of the B pixel regions of the color filter that is shown in FIG. 2, where light in a short wavelength region that corresponds to light with a wavelength that is close to blue (B) is selectively transmitted.

The G pixel spectrum is the spectral characteristic (the spectral transmittance) of the G pixel regions of the color filter that is shown in FIG. 2, where light in a medium wavelength region that corresponds to light with a wavelength that is close to green (G) is selectively transmitted.

The R pixel spectrum is the spectral characteristic (the spectral transmittance) of the R pixel regions of the color filter that is shown in FIG. 2, where light in a long wavelength region that corresponds to light with a wavelength that is close to red (R) is selectively transmitted.

The IR pixel spectrum is the spectral characteristic (the spectral transmittance) of the IR pixel regions of the color filter that is shown in FIG. 2, where light in an ultra-long wavelength region that corresponds to light with a wavelength that is close to infrared (IR) is selectively transmitted.

The spectral characteristics diagram that is shown in FIG. 3 shows the ideal characteristics. However, even if an image capture device is actually manufactured that is provided with the color filter that is shown in FIG. 2, for example, it is difficult to achieve ideal spectral characteristics like those shown in FIG. 3.

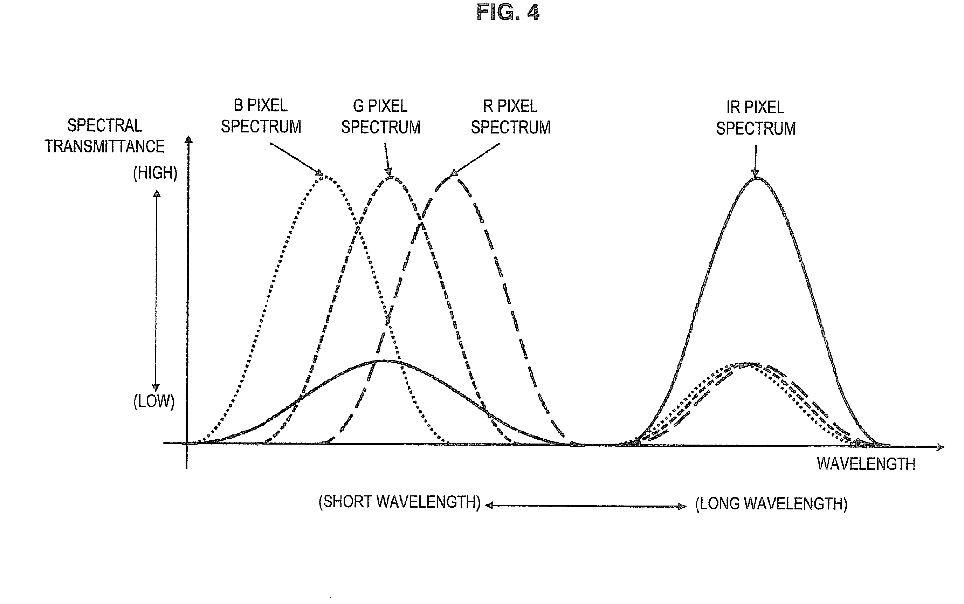

An example of the spectral characteristics of an image capture device that is actually manufactured is shown in FIG. 4.

In the same manner as in FIG. 3, the horizontal axis is the wavelength, and the vertical axis is the spectral transmittance.

The spectral characteristics of the image capture device that is actually manufactured as an image capture device that is provided with a filter that has the color array in FIG. 2 indicate that a problem arises in that, as shown in FIG. 4, the pixels for capturing visible light have sensitivity to infrared light, and the pixels for capturing infrared light have sensitivity to visible light.

The image processing device according to the present disclosure makes it possible to input image signals that have been captured by an image capture device that has spectral characteristics like those shown in FIG. 4, that is, imperfect spectral characteristics, and to produce high quality visible light component images and non-visible light component images by performing signal processing that will hereinafter be explained.

3. Details of image processing

Next, details of the image processing that is performed in the image processing device according to the present disclosure will be explained. The image processing that will hereinafter be explained may be performed in the DSP block 108 of the image capture apparatus 100 that is shown in FIG. 1, for example.

In the DSP block 108, interpolation processing that is able to restore a signal up to its high frequency component, processing that performs spectral correction by matrix computation, and contrast enhancement processing of the non-visible light component image are performed.

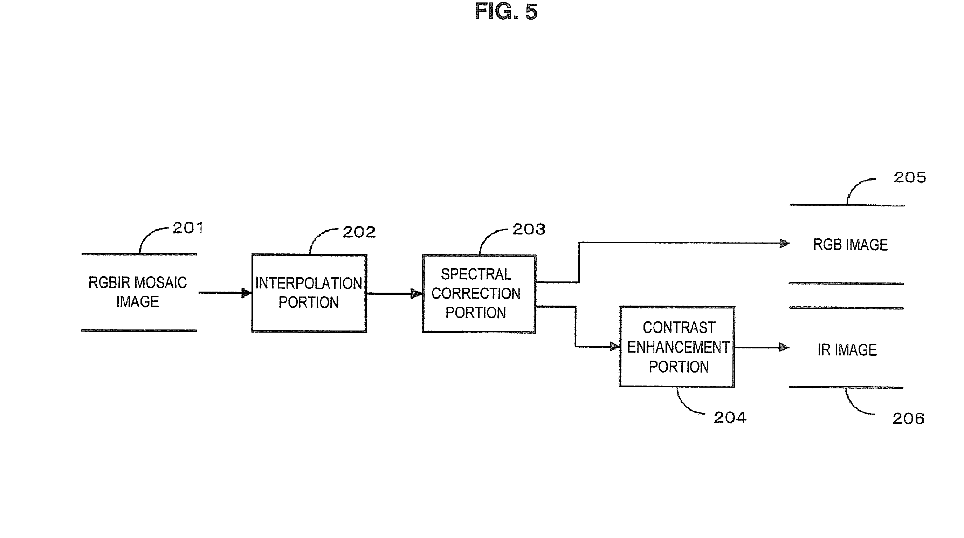

Hereinafter, an overview of all of the processing that generates the visible light component image (the RGB image) and the non-visible light component image (the IR image) will be explained first with reference to FIG. 5, and then the individual processing portions that is shown in FIG. 5 will be explained in detail. The explanation will cover the items below in order.

(3-1) Entire sequence of the image processing

(3-2) Details of individual processes in the image processing

(3-1) Entire sequence of the image processing

First, the entire sequence of the image processing that is performed in the image processing device according to the present disclosure, that is, the processing that generates the visible light component image (the RGB image) and the non-visible light component image (the IR image), will be explained with reference to FIG. 5.
FIG. 5 is a figure that explains the processing that is performed in the DSP block 108 as an image processing portion of the image capture apparatus 100 that is shown in FIG. 1.
In FIG. 5, one processing portion is shown for each of the plurality of the processes that are performed in the DSP block 108.
As shown in FIG. 5, the image processing portion (the DSP block 108) includes an interpolation portion 202, a spectral correction portion 203, and a contrast enhancement portion 204.
An RGBIR mosaic image 201 is a mosaic image that has been captured by the image capture device 105 that is shown in FIG. 1. That is, it is a mosaic image in which only one signal for one wavelength of light, R, G, B, or IR, has been set for each pixel.
In other words, the RGBIR mosaic image 201 is a mosaic image that has been captured by the image capture device 105, which is provided with the color filter with the array that is shown in FIG. 2, which transmits visible light (R, G, B) and non-visible light (IR). Noise removal is performed by the correlated double sampling (CDS) circuit 106, and after the signals are converted into digital data, that is, are digitized, by the A/D converter 107, the image is stored in the image memory in the DSP block 108.
The interpolation portion 202 performs interpolation processing that sets all of the RGBIR pixel values for every pixel in the RGBIR mosaic image 201, in which only one pixel value, R, G, B, or IR, has been set for each pixel.
For example, pixel value interpolation processing is performed that interpolates the G, B, and IR pixel values for the pixel positions where the R color filters are located, interpolates the R, B, and IR pixel values for the pixel positions where the G color filters are located, interpolates the R, G, and IR pixel values for the pixel positions where the B color filters are located, and interpolates the R, G, and B pixel values for the pixel positions where the IR color filters are located.
For example, the interpolation portion 202 may perform the interpolation of the color signals by generating a luminance signal that has a resolution that is higher than that of any of the colors that are included in the mosaic signal, then using the luminance signal as a reference.
Note that the luminance signal is produced by combining the plurality of the color signals that are located in the vicinity of an object pixel position that defines the pixel values that are being interpolated.
Ordinarily, a strong correlation exists among the plurality of the color signals that have been captured. Taking advantage of this correlation, the plurality of the color signals can be combined, and a luminance signal with a higher resolution than that of any one color signal can be generated. Furthermore, the strong correlation between the luminance signal and the color signals can be used to produce interpolated values that restore all of the colors up to their high frequency component.
The spectral correction portion 203 inputs an RGBIR image that is an interpolated image that the interpolation portion 202 has generated and in which pixel values for all of the colors are provided for every pixel. For each of the pixel positions, the spectral correction portion 203 performs a separate matrix computation with respect to the pixel values for the four colors (R, G, B, IR) that are present in the pixel position, thereby computing new four-color pixel values in which the spectrum has been corrected.
This processing expands on the computations that have been used for improving color reproduction in known camera signal processing. For example, the color reproduction is improved by a computation that computes new three-color values by using a three-by-three matrix with respect to the three colors (R, G, B) of visible light that are captured by an ordinary camera. In the configuration of the present disclosure, a four-by-four matrix is used with respect to a total of four colors, that is, the three colors of visible light and the one color of non-visible light.
In the R, G, and B pixels in which the spectra have been corrected, the non-visible light component is suppressed, and in the IR pixels in which the spectra have been corrected, the visible light components are suppressed.
The outputs of the spectral correction portion 203 are divided into an RGB image 205 that is made up of the visible light components and an IR image that is made up of the non-visible light component.
The IR image that has been output from the spectral correction portion 203 is input to the contrast enhancement portion 204, where the non-visible light component is enhanced, and an IR image 206 is output in which the visible light components are suppressed.

Note that in the image processing device according to the present disclosure, it is assumed that non-visible light is used for the three-dimensional measurement.

Accordingly, the non-visible light pattern is projected onto the subject from the light emitting portion 102 that was explained previously with reference to FIG. 1.

The pattern is configured from bright points and bright lines, giving it a texture with high contrast.

Therefore, on the subject, the non-visible light component is dominant in the high contrast texture, and the visible light components are dominant in a low contrast texture.

Furthermore, because there is generally axial chromatic aberration in a lens, if the lens is focused for non-visible light, blurring of visible light will occur.

This sort of optical phenomenon is one factor in the non-visible light component's having high contrast.

In other words, separating the IR image that has been output by the spectral correction portion 203 into contrasting components and non-contrasting components is almost the same thing as separating it into non-visible light components and visible light components.

Note that a contrast enhancement technology that has been used for some time may also be used for the contrast enhancement. For example, the contrast enhancement may be performed by signal correction in real space, such as histogram stretching or tone curves, and it may also be performed by signal correction in a frequency space, such as enhancement of the high frequency component.

If tone curves are used, it is good to use S-shaped curves that make dark areas darker and bright areas brighter. This is because, even if visible light is mixed into the IR image that has been output by the spectral correction portion 203, the non-visible light signal is more dominant, so a brighter image is captured.

Note that a technique that uses an edge preserving smoothing filter may be used as an effective contrast enhancement technique in the image processing device according to the present disclosure.

The edge preserving smoothing filter is a smoothing technique that smooths detailed textures (signals that include a high frequency component in a small surface area) of the subject and leaves only large textures. A bilateral filter is a known representative technique.

The projected pattern of the non-visible light has more detailed textures than does the visible light background, and these can be separated out by the edge preserving smoothing filter.

Using gains and tone curves on the two images of the separated visible light and non-visible light makes it possible to suppress the visible light and to enhance the non-visible light.

(3-2) Details of individual processes in the image processing

Next, the details of the processing that is performed in each of the processing portions that are shown in FIG. 5 will be explained in order.

(3-2-1) Processing of the interpolation portion 202

First, the interpolation portion 202 that is shown in FIG. 5 will be explained in detail.

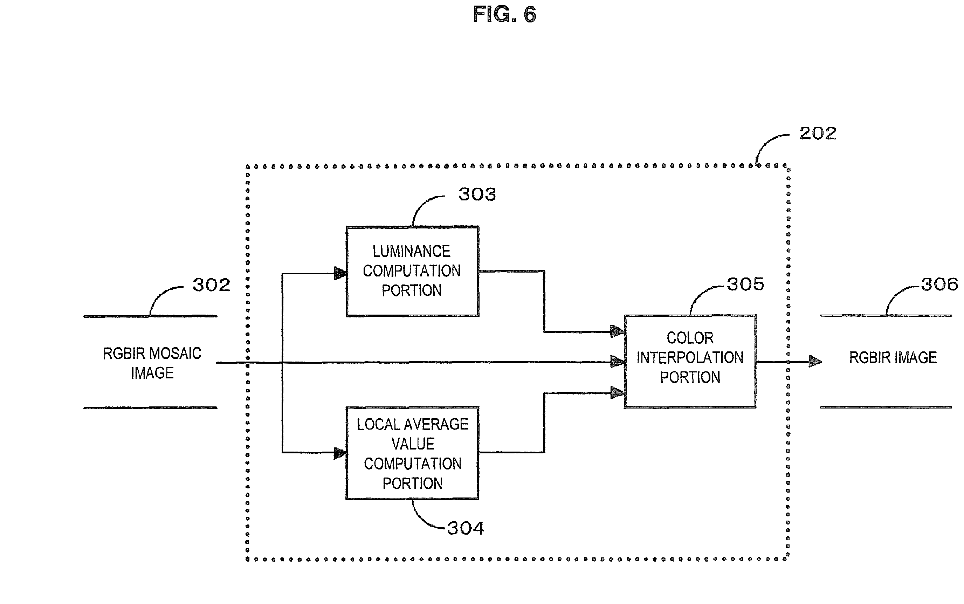

A detailed block diagram of the interpolation portion 202 is shown in FIG. 6. As shown in FIG. 6, the interpolation portion 202 includes a luminance computation portion 303, a local average value computation portion 304, and a color interpolation portion 305.

Hereinafter, the processing that is performed by each of these processing portions will be explained.

Luminance computation portion 303

In the luminance computation portion 303, a luminance signal Y is computed that has more pixels and a higher frequency component than that of any of the four colors (R, G, B, IR) that are included in the color filter that is shown in FIG. 2.

Specifically, the luminance signal Y is computed using Equation 1 that is shown below, for example.

Equation 1

$$Y(x+0.5, y+0.5)$$
$$= Mosaic(x, y) + Mosaic(x+1, y) + Mosaic(x, y+1) + Mosaic(x+1, y+1)$$

In Equation 1, x, y indicate a pixel position, and "Mosaic" indicates an RGBIR mosaic image (an RGBIR mosaic image 302 that is shown in FIG. 6).

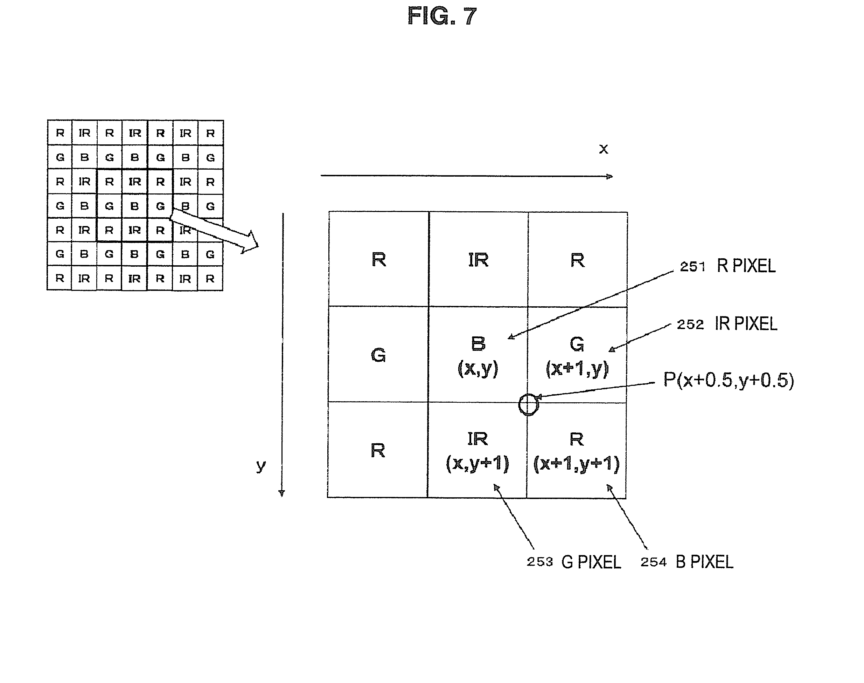

An example of the processing that computes the luminance signal Y in Equation 1 will be explained with reference to FIG. 7. The luminance signal Y (x + 0.5, y + 0.5) that is computed by Equation 1 corresponds to a luminance at a point P in FIG. 7.

If the object pixel position is defined as a center pixel 251, that is, a B pixel (x, y), the luminance signal Y is computed as the luminance at a position that is offset from the object pixel by half a pixel in both the x and y directions, that is, at a coordinate position (x + 0.5, y + 0.5).

In order to compute the luminance signal Y (x + 0.5, y + 0.5) at the point P in FIG. 7, the computation is performed using the four pixel values of four pixels that are shown in FIG. 7, specifically, the pixel value [Mosaic (x, y)] of pixel 251: B pixel (x, y), the pixel value [Mosaic (x + 1, y)] of pixel 252: G pixel (x + 1, y), the pixel value [Mosaic (x, y + 1)] of pixel 253: IR pixel (x, y + 1), and the pixel value [Mosaic (x + 1, y + 1)] of pixel 254: R pixel (x + 1, y + 1).

In the luminance computation portion 303, the pixels that configure the RGBIR mosaic image 302 that has been input to the interpolation portion 202 are selected sequentially in units of four pixels, the luminance signal Y is computed according to Equation 1, and a luminance image is generated.

Local average value computation portion 304

Next, the processing in the local average value computation portion 304 of the interpolation portion 202 that is shown in FIG. 6 will be explained.

In the local average value computation portion 304, weighted average values are computed for the R, G, B, and IR pixel values in a local region that has the object pixel at its center.

Hereinafter, the average values for the individual colors R, G, B, and IR will be called mR, mG, mB, and mIR, respectively.

In the luminance computation portion 303, as explained previously with reference to FIG. 7, the luminance signal Y is computed at a position that is offset by half a pixel with respect to the RGBIR mosaic image 302, so the average values are also computed for the position (x + 0.5, y + 0.5) that is offset by half a pixel from the object pixel position (x, y).

For example, if the B pixel in the center is defined as (x, y), as shown in FIG. 7, the average values that correspond to the individual colors, specifically, mR (x + 0.5, y + 0.5), mG (x + 0.5, y + 0.5), mB (x + 0.5, y + 0.5), and mIR (x + 0.5, y + 0.5), can be computed using Equation 2, which is shown below.

Equation 2

$$mR(x+0.5, y+0.5)$$
$$= \bigl(Mosaic(x-1, y-1) + Mosaic(x+1, y-1) \times 3 + Mosaic(x-1, y+1) \times 3 + Mosaic(x+1, y+1) \times 9\bigr)/16$$

$$mG(x+0.5, y+0.5)$$
$$= \bigl(Mosaic(x-1, y) \times 3 + Mosaic(x+1, y) \times 9 + Mosaic(x-1, y+2) + Mosaic(x+1, y+2) \times 3\bigr)/16$$

$$mB(x+0.5, y+0.5)$$
$$= \bigl(Mosaic(x, y) \times 9 + Mosaic(x+2, y) \times 3 + Mosaic(x, y+2) \times 3 + Mosaic(x+2, y+2)\bigr)/16$$

$$mIR(x+0.5, y+0.5)$$
$$= \bigl(Mosaic(x, y-1) \times 3 + Mosaic(x+2, y-1) + Mosaic(x, y+1) \times 9 + Mosaic(x+2, y+1) \times 3\bigr)/16$$

Color interpolation portion 305

Next, the processing in the color interpolation portion 305 of the interpolation portion 202 that is shown in FIG. 6 will be explained.

In the color interpolation portion 305, a pixel value C for an unknown color is interpolated at the pixel position (x + 0.5, y + 0.5) in accordance with Equation 3, which is shown below.

Note that C is equal to one of R, G, B, and IR.

Equation 3

$$C(x+0.5, y+0.5) = \frac{mC(x+0.5, y+0.5)}{mY(x+0.5, y+0.5)} Y(x+0.5, y+0.5)$$

$$mY(x+0.5, y+0.5)$$
$$= \big(mR(x+0.5, y+0.5) + mG(x+0.5, y+0.5) + mB(x+0.5, y+0.5) + mIR(x+0.5, y+0.5)\big)/4$$

In Equation 3, C indicates a color that is any one of R, G, B, and IR.

C (x + 0.5, y + 0.5) indicates the pixel values for R, G, B, and IR at a position that is offset from the object pixel position (x, y) by half a pixel each in the x and y directions.

mY indicates the average value of the luminance component.

Equation 3 is an interpolation formula that takes advantage of the fact that the luminance signal and the color signals have a strong positive correlation in the local region, and also takes advantage of the fact that the ratio of the average values for the two signals is almost equal to the ratio of the two signals.

An RGBIR image 306 that has been interpolated in the color interpolation portion 305 is computed at a position that is offset by half a pixel in the x and y directions in relation to the RGBIR mosaic image 302 that is the input image to the interpolation portion 202.

The DSP block 108 may be configured such that the interpolated image is used as is in the subsequent processing, and it may be configured such that the interpolated image is input to the processing portion at the next stage after the half-pixel offset is corrected using bicubic interpolation or the like.

Whichever configuration is used, the explanation will be continued with the pixel position in the interpolated image being indicated by x, y.

(3-2-2) Processing of the spectral correction portion 203

Next, the spectral correction portion 203 that is shown in FIG. 5 will be explained in detail.

As explained previously, the spectral correction portion 203 inputs the RGBIR image that is the interpolated image that the interpolation portion 202 has generated and in which the pixel values for all of the colors are provided for every pixel. For each of the pixel positions, the spectral correction portion 203 performs a separate matrix computation with respect to the pixel values for the four colors (R, G, B, IR) that are present in the pixel position, thereby computing new four-color pixel values in which the spectrum has been corrected. In the configuration of the present disclosure, a four-by-four matrix is used with respect to the total of four colors, that is, the three colors of visible light and the one color of non-visible light.

In the R, G, and B pixels in which the spectra have been corrected, the non-visible light component is suppressed, and in the IR pixels in which the spectra have been corrected, the visible light components are suppressed.

The outputs of the spectral correction portion 203 are divided into the RGB image 205 that is made up of the visible light components and the IR image that is made up of the non-visible light component.

The spectral correction portion 203 performs the correction of the spectrum using a matrix computation in Equation 4 that is shown below.

Equation 4

$$\begin{pmatrix} R'(x,y) \\ G'(x,y) \\ B'(x,y) \\ IR'(x,y) \end{pmatrix} = \begin{pmatrix} m00 & m01 & m02 & m03 \\ m10 & m11 & m12 & m13 \\ m20 & m21 & m22 & m23 \\ m30 & m31 & m32 & m33 \end{pmatrix} \begin{pmatrix} R(x,y) \\ G(x,y) \\ B(x,y) \\ IR(x,y) \end{pmatrix}$$

In Equation 4, R, G, B, and IR indicate the pixel values for the four colors that have been interpolated in the color interpolation portion 305 within the interpolation portion 202 that is shown in FIG. 6, and R', G', B', and IR' indicate the pixel values for which the spectra have been corrected.

An example of a method for deriving the elements m00 to m33 of the matrix that is shown in Equation 4 will hereinafter be described.

The spectral characteristics of the ideal image capture device (FIG. 3) and the spectral characteristics of an actual image capture device (FIG. 4) were explained earlier with reference to FIGS. 3 and 4.

The spectral transmittances that correspond to the respective wavelengths (I) of the four colors (R, G, B, IR) that correspond to the ideal spectral characteristics that were explained with reference to FIG. 3 are defined as r(1), g (1), b(1), ir(1).

Here, "I" indicates the wavelength.

Further, the spectral transmittances that correspond to the respective wavelengths (I) of the four colors (R, G, B, IR) that correspond to the spectral characteristics of the actual device that was explained with reference to FIG. 4 are defined as r'(1), g'(1), b'(1), ir'(1). Here, "I" indicates the wavelength.

If these spectral transmittances are discretized in relation to the wavelength (I), Equation 5 shown below is produced.

Equation 5

$$\begin{pmatrix} r(l_0) & r(l_1) & r(l_2) & r(l_N) \\ g(l_0) & g(l_1) & g(l_2) & g(l_N) \\ b(l_0) & b(l_1) & b(l_2) & b(l_N) \\ ir(l_0) & ir(l_1) & ir(l_2) & ir(l_N) \end{pmatrix} \cdots$$

$$\cong \begin{pmatrix} m00 & m01 & m02 & m03 \\ m10 & m11 & m12 & m13 \\ m20 & m21 & m22 & m23 \\ m30 & m31 & m32 & m33 \end{pmatrix} \begin{pmatrix} r'(l_0) & r'(l_1) & r'(l_2) & r'(l_N) \\ g'(l_0) & g'(l_1) & g'(l_2) & g'(l_N) \\ b'(l_0) & b'(l_1) & b'(l_2) & b'(l_N) \\ ir'(l_0) & ir'(l_1) & ir'(l_2) & ir'(l_N) \end{pmatrix} \cdots$$

In Equation 5, $1_x$ indicates the discretized wavelength.

Note that Equation 5 shows an example in which the wavelengths have been discretized in the N + 1 values, from $1_0$ to $1_N$.

If Equation 5 is solved using the least-squares method, the elements m00 to m33 of the matrix that is shown in Equation 4 are obtained.

That is, when the matrix that is made up of the spectral transmittances r(1), g(1), b(1), ir(1) that correspond to the respective wavelengths (1) of the four colors (R, G, B, IR) that correspond to the ideal spectral characteristics that were explained with reference to FIG. 3 is defined as A, the matrix that is made up of the spectral transmittances r'(1), g'(1), b'(1), ir'(I) that correspond to the respective wavelengths (1) of the four colors (R, G, B, IR) that correspond to the spectral characteristics of the actual device that was explained with reference to FIG. 4 is defined as B, and the matrix that is made up of the elements $m00$ to $m33$ that convert the interpolated pixel values R, G, B, IR that are shown in Equation 4 into the pixel values R', G', B', IR' for which the spectrum has been corrected is defined as M, then the elements $m00$ to $m33$ of the matrix M that is shown in Equation 4 are obtained by using the least-squares method, for example, to compute the matrix M that minimizes the difference between A and MB.

Thus the matrix elements $m00$ to $m33$ that are shown in Equation 4 are computed by using the least-squares method to solve the relationship Equation 5, in which the spectral transmittances that correspond to the ideal spectral characteristics that were explained with reference to FIG. 3 and the spectral transmittances that correspond to the spectral characteristics of the actual device that was explained with reference to FIG. 4 are associated with one another by the matrix elements $m00$ to $m33$.

However, in order to solve Equation 5 using the least-squares method, it is necessary to discretize the spectral transmittances at sufficiently small wavelength intervals.

(3-2-3) Processing of the contrast enhancement portion 204

Next, the contrast enhancement portion 204 that is shown in FIG. 5 will be explained in detail.

The contrast enhancement portion 204 performs processing that enhances the non-visible light component of the IR image that has been output by the spectral correction portion 203 and outputs the IR image 206 in which the visible light component has been suppressed.

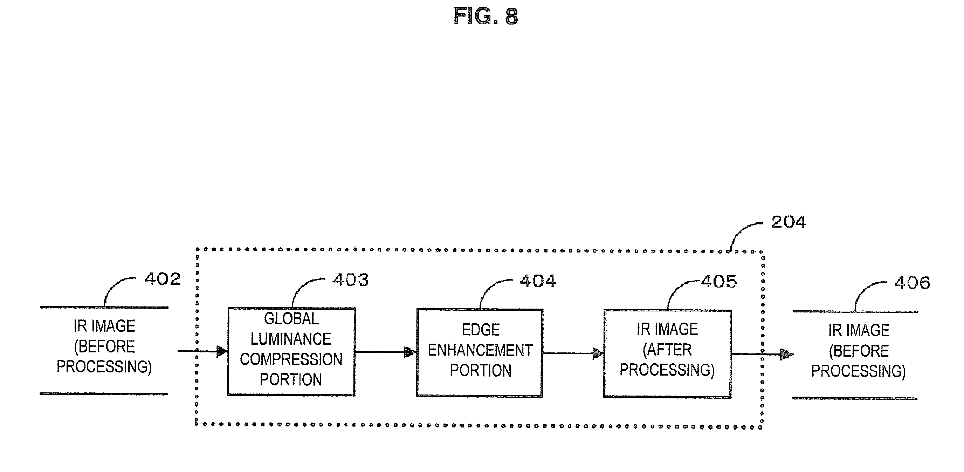

A detailed block diagram of the contrast enhancement portion 204 is shown in FIG. 8.

As shown in FIG. 8, the contrast enhancement portion 204 includes a global luminance compression portion 403, an edge enhancement portion 404, and a tone curve application portion 405.

Next, the processing in each of these processing portions will be explained in order.

Global luminance compression portion 403

First, the processing that is performed by the global luminance compression portion 403 that is shown in FIG. 8 will be explained.

The global luminance compression portion 403 takes an IR image 402, which is the non-visible light component image that is input from the spectral correction portion 203, then performs processing that separates the IR image 402 into a global luminance component and a contrast component, compresses the global luminance component, and enhances the contrast component.

Here, the global luminance component is an image in which the edge preserving smoothing filter has been applied to the IR image 402, and the contrast component is a difference image that is created by subtracting the global luminance component from the IR image 402.

An example of the edge preserving smoothing processing is processing that uses a bilateral filter, and after the smoothing processing, an image $IR_s$ can be generated in accordance with Equation 6 below.

Equation 6

$$IR_S(x, y) = \frac{\sum\limits_{dx,dy \in local} w(x, y, dx, dy) IR(x + dx, y + dy)}{\sum\limits_{dx,dy \in local} w(x, y, dx, dy)}$$

$$w(x, y, dx, dy) = e^{-\frac{1}{2}\left(\frac{\sqrt{dx^2 + dy^2}}{\sigma_d}\right)^2} e^{-\frac{1}{2}\left(\frac{IR(x+dx, y+dy) - IR(x,y)}{\sigma_r}\right)^2}$$

In Equation 6, dx and dy are variables that indicate local regions, while σd and σr are tuning parameters for adjusting the extent of the smoothing.

The IR image after the smoothing is indicated by $IR_S$.

The processing that compresses the global luminance component and enhances the contrast component uses the image $IR_S$ that is produced by the smoothing processing, and is performed by applying Equation 7 that is shown below. After the processing that compresses the global luminance component and enhances the contrast component, an image $IR_{GLC}$ is generated.

Equation 7

$$IR_{GLC}(x, y) = IR_S(x, y) \times Gain_{Sup} + (IR(x, y) - IR_S(x, y)) \times Gain_{Enh}$$

In Equation 7, $Gain_{Sup}$ is a tuning parameter that adjusts the extent of the compression of the global luminance component, and $Gain_{Enh}$ is a tuning parameter that adjusts the extent of the enhancement of the contrast component.

$IR_{GLC}$ is the image after the processing that compresses the global luminance component and enhances the contrast component.

Edge enhancement portion 404

Next, the processing that is performed by the edge enhancement portion 404 that is shown in FIG. 8 will be explained.

The edge enhancement portion 404 inputs the IR image ($IR_{GLC}$) on which the processing that compresses the global luminance component and enhances the contrast component has been performed and which has been generated based on the IR image 402, which is the non-visible light component image that was generated by the global luminance compression portion 403. The edge enhancement portion 404 performs processing that enhances the high frequency component of the IR image.

First, a high frequency component $IR_H$ is computed by using a high pass filter that is shown in Equation 8 below, for example.

Equation 8

$$IR_H = IR_{GLC} \otimes \begin{pmatrix} -1/16 & -2/16 & -1/16 \\ -2/16 & 12/16 & -2/16 \\ -1/16 & -2/16 & -1/16 \end{pmatrix}$$

In Equation 8, the three-by-three matrix is the equivalent of the high pass filter, and $IR_H$ indicates the high frequency component that is the result of applying the high pass filter to the IR image ($IR_{GLC}$).

Next, the edge enhancement portion 404 inputs the IR image ($IR_{GLC}$) that has been computed by Equation 8 and generates an edge enhanced IR image ($IR_{EE}$) by using Equation 9 below to perform processing that enhances the high frequency component ($IR_H$) of the IR image, that is, edge enhancement processing.

Equation 9

$$IR_{EE}(x, y) = IR_{GLC}(x, y) + IR_H(x, y) \times Gain_H$$

In Equation 9, $Gain_H$ is a tuning parameter that adjusts the extent of the edge enhancement. $IR_{EE}$ indicates the non-visible light component image (the IR image) after the edge enhancement.

Tone curve application portion 405

Next, the processing that is performed by the tone curve application portion 405 that is shown in FIG. 8 will be explained.

The tone curve application portion 405 inputs the non-visible light component image (the IR image) that the edge enhancement portion 404 generated after the edge enhancement, that is the image ($IR_{EE}$) that is computed by Equation 9, and then performs contrast enhancement.

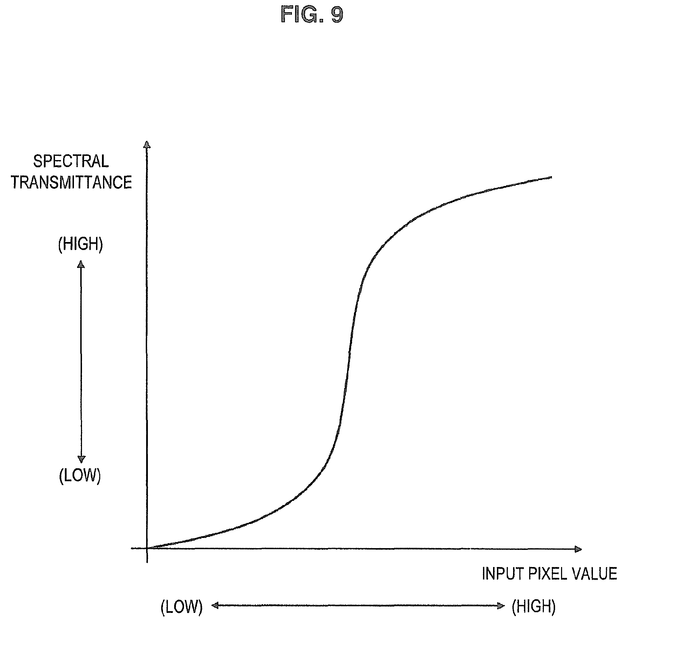

The contrast enhancement is performed using the S-shaped tone curve that is shown in FIG. 9, for example.

In FIG. 9, the horizontal axis is the input pixel value (the pixel value in the image ($IR_{EE}$) that is computed by Equation 9), and the vertical axis is the output pixel value (the pixel value for an image that is generated by the processing in the tone curve application portion 405).

Note that the tone curve application portion 405 may use data for an S-shaped tone curve like that shown in FIG. 9 that are stored in memory in advance as a fixed shape, and it may also adaptively create a new S-shaped tone curve for each image.

One example of an S-shaped tone curve that is adaptively created is an example that uses a sigmoid function.

Specifically, the contrast enhancement can be performed using the sigmoid function that is shown in Equation 10 below, for example.

Equation 10

$$j = 0 \quad if \quad i < Min$$

$$j = 1 \quad if \quad i > Max$$

$$j = \cfrac{1}{1 + e^{-a\frac{(i-(Min+Max)/2)}{Max-Min}}} \quad otherwise$$

Note that in Equation 10, the pixel values exist within the range of [0, 1].

i is the pixel value that is input, j is the pixel value that is output, and a is a tuning parameter for adjusting the shape of the curve.

Min is a pixel value for which, when the pixel values in the input image are lined up in order from the darkest pixel value to the brightest pixel value, a pixel value may be selected that is in a position that is separated from the darkest pixel value by a number of pixels that is approximately 1% of the total number of pixels.

Max is a pixel value for which a pixel value may be selected that is in a position that is separated from the brightest pixel value by a number of pixels that is approximately 1% of the total number of pixels.

Further, a may be selected such that the tone curve does not become extremely discontinuous at the Min and Max positions.

According to the example that has been explained above, it is possible to produce a non-visible light component image (an IR image) that has sufficient resolution and contrast from a mosaic image that has been captured by a single panel color image capture element using a color filter array that has pixel regions that transmit visible light and pixel regions that transmit non-visible light, like that shown in FIG. 2, for example.

4. Image processing sequence

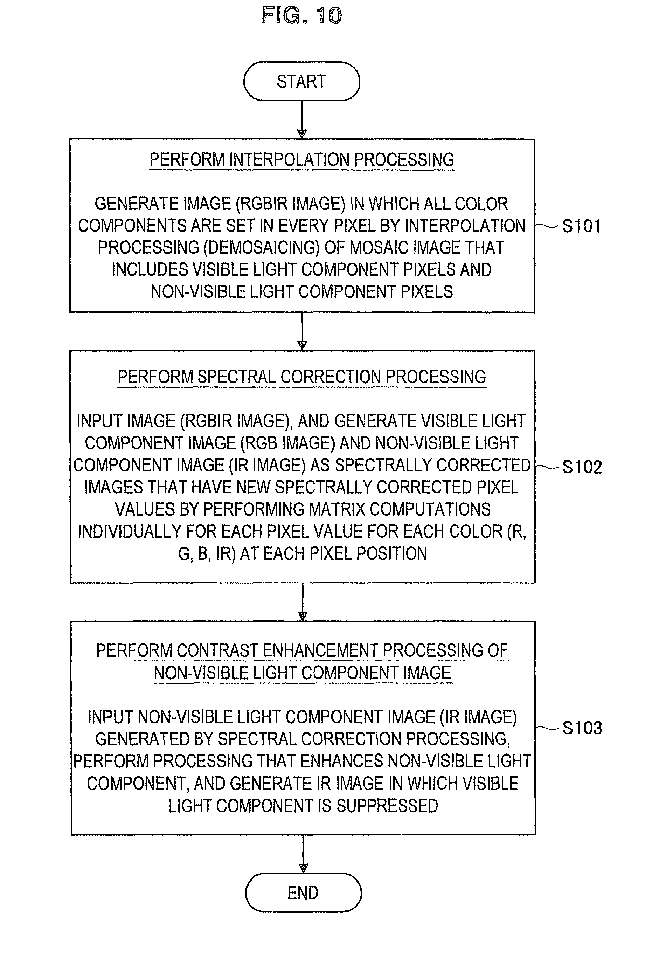

Next, the image processing sequence that is performed in the DSP block 108 of the image capture apparatus 100 that is shown in FIG. 1 will be explained with reference to a flowchart that is shown in FIG. 10.

The processing in the flowchart that is shown in FIG. 10 is performed in the DSP block 108 of the image capture apparatus 100 that is shown in FIG. 1.

For example, a computation unit such as a CPU or the like in the DSP block 108 may perform the processing, in accordance with a program that is stored in a memory, by sequentially performing computations on a stream of image signals that are input.

The processing at each step in the flowchart that is shown in FIG. 10 will be explained.

First, at Step S101, the interpolation processing is performed.

This corresponds to the processing by the interpolation portion 202 that is shown in FIG. 5.

The interpolation portion 202 performs the interpolation processing on the mosaic image and generates the interpolated image in which the visible light component pixel values and the non-visible light component pixel values have been set for each pixel position.

The interpolation portion 202 generates the image (the RGBIR image), in which all of the color components have been set in each pixel, by performing the interpolation processing (the demosaicing) for the mosaic image that is input to the DSP block 108, that is, the mosaic image that includes the visible light component pixels and the non-visible light component pixels.

Specifically, as explained previously with reference to FIG. 6, the image (the RGBIR image), in which all of the color components have been set in each pixel, is generated by the processes hereinafter described.

Process 1: In the luminance computation portion 303, the luminance signal Y is computed based on the input mosaic image by using the aforementioned Equation 1.

Process 2: In the local average value computation portion 304, the average values (mR, mG, mB, mIR) that correspond to the individual colors (R, G, B, IR) are computed based on the input mosaic image by using the aforementioned Equation 2.

Process 3: In the color interpolation portion 305, the pixel values for all of the colors (R, G, B, IR) that correspond to the individual pixel positions are computed by using the aforementioned Equation 3.

The interpolation processing (the demosaic processing) that is based on the mosaic image is performed by these processes, and the RGBIR image is generated in which the pixel values for all of the colors (R, G, B, IR) have been set in each pixel.

Next, at Step S 102, the spectral correction processing is performed.

This corresponds to the processing by the spectral correction portion 203 that is shown in FIG. 5.

The spectral correction portion 203 inputs the RGBIR image in which the pixel values for all of the colors have been set for every pixel, which is the interpolated image that the interpolation portion 202 generated. For each of the pixel positions, the spectral correction portion 203 performs a separate matrix computation with respect to the pixel values for the four colors (R, G, B, IR) that are present in the pixel position, thereby computing new four-color pixel values in which the spectrum has been corrected. The spectral correction portion 203 then generates an image in which the spectral characteristics have been corrected, the image being made up of the pixel values for which the spectral characteristics have been corrected.

Note that the outputs of the spectral correction portion 203 are divided into the RGB image 205 that is made up of the visible light components and the IR image that is made up of the non-visible light component.

The spectral correction portion 203 corrects the spectrum using the matrix computation in Equation 4, which was explained earlier.

Note that the matrix elements m00 to m33 that are shown in Equation 4 are computed by using the least-squares method to solve the relationship Equation 5, in which the spectral transmittances that correspond to the ideal spectral characteristics and the spectral transmittances that correspond to the spectral characteristics of the actual device, which were explained earlier, are associated with one another by the matrix elements m00 to m33.

Next, at Step S103, the contrast enhancement processing is performed on the non-visible light component image.

This processing is performed by the contrast enhancement portion 204 that is shown in FIG. 5.

The contrast enhancement portion 204 performs the contrast enhancement processing on the non-visible light component image with the corrected spectral characteristics that was generated by the spectral correction portion 203, and generates the non-visible light component image with the enhanced contrast.

That is, the contrast enhancement portion 204 inputs the non-visible light component image (the IR image) that was generated by the spectral correction processing at Step S102 and in which the spectral characteristics have been corrected. The contrast enhancement portion 204 performs the contrast enhancement processing for the non-visible light component and generates the IR image in which the visible light component has been suppressed.

Specifically, as explained with reference to FIG. 8, the contrast enhancement processing for the non-visible light component is performed by performing Process 1 to Process 3 below, and the IR image in which the visible light component has been suppressed is generated.

Process 1: In the global luminance compression portion 403, the processing is performed by inputting the non-visible light component image (the IR image) in which the spectral characteristics have been corrected, separating the global luminance component and the contrast component, then compressing the global luminance component and enhancing the contrast component.

Specifically, the image ($IR_S$), for which the edge preserving smoothing processing has been performed using the bilateral filter in the aforementioned Equation 6, is generated. Next, the processing is performed that generates the image $IR_{GLC}$ after the processing that compresses the global luminance component and enhances the contrast component using the aforementioned Equation 7.

Process 2: In the edge enhancement portion 404 that is shown in FIG. 8, the IR image ($IR_{GLC}$) on which the processing that compresses the global luminance component and enhances the contrast component has been performed is input, and the processing that enhances the high frequency component is performed.

Specifically, the high frequency component $IR_H$ of the IR image ($IR_{GLC}$) is computed by the aforementioned Equation 8, and the edge enhanced IR image ($IR_{EE}$) is generated using Equation 9.

Process 3: In the tone curve application portion 405 that is shown in FIG. 8, the edge enhanced non-visible light component image (the IR image) that has been generated by the edge enhancement portion 404, that is, the image ($IR_{EE}$) that is computed by Equation 9, is input, and the contrast enhancement processing is performed.

The contrast enhancement may be performed by using the S-shaped tone curve that is shown in FIG. 9, for example.

Alternatively, the contrast enhancement can be performed by using the sigmoid function in accordance with the aforementioned Equation 10.

The visible light component image (the RGB image) is generated by the processing at Steps S101 1 to S 102, and the non-visible light component image (the IR image) that has sufficient resolution and contrast can be produced by the processing at Steps S101 to S 103.

Note that it is possible for the processing that has been explained with reference to FIG. 10 to be performed in the DSP block 108 that is shown in FIG. 1 by executing a program in which the processing sequence that is shown in FIG. 10 has been encoded in advance, but the program format aside, it is also possible for the processing to be achieved by a hardware circuit that implements processing that is equivalent to the processing in the blocks that have been explained with reference to FIGS. 5, 6, and 8.

5. Other examples

Next, a modified example of the example that is described above will be explained.

In the example that is described above, in the luminance computation portion 303 of the interpolation portion 202 that was explained with reference to FIG. 6, in the computing of the luminance signal Y, the R, G, B, and IR pixel values in the vicinity of the object pixel position (x, y) are simply added together and averaged, in accordance with Equation 1.

The processing that computes the luminance signal Y is not limited to this sort of processing, and the luminance computation portion 303 may be configured such that a more complex method is used, such as processing that takes the edge direction or the like into consideration, for example.

That is, processing may also be performed that computes the luminance signal Y by taking the edge direction into consideration and assigning a greater weighting to the luminance value of a nearby pixels that has a luminance that is closer to the luminance of the object pixel.

Furthermore, in the example that is described above, in the interpolation portion 202, the pixel value is computed for the position (x + 0.5, y + 0.5) that is offset from the pixel position of the object pixel by half a pixel in both the x and y directions, as was explained with reference to FIG. 7, but the pixel value may also be computed, without offsetting the pixel position, by changing a coefficient of the filter that is used by the interpolation portion 202.

In addition, in the example that is described above, the processing of the contrast enhancement portion 204 that is shown in FIG. 5 was explained with reference to FIG. 8 as using the three different methods of the global luminance compression portion 403, the edge enhancement portion 404, and the tone curve application portion 405 in order to enhance the contrast, but this is merely one example. The order in which the methods are used may be changed, and methods other than the three described methods may also be used.

Furthermore, in order to suppress the enhancement of noise in the edge enhancement portion 404, coring processing may also be performed on the image ($IR_H$) that is generated by the global luminance compression portion 403. High pass filters for a plurality of different bands may also be used instead of only one high pass filter for a single band.

In addition, in the example that is described above, in the tone curve application portion 405, a simple S-shaped curve like that shown in FIG. 9 is used as the tone curve, but a tone curve with a more complex shape may also be used.

6. Summary of the configurations of the present disclosure

It should be understood by those skilled in the art that various modifications, combinations, subcombinations and alterations may occur depending on design requirements and other factors insofar as they are within the scope of the appended claims or the equivalents thereof.

Additionally, the present technology may also be configured as below.

(1)

An image processing device, comprising:

a spectral correction portion that inputs a mosaic image that is made up of a visible light component pixel in which mainly a visible light component has been captured and a non-visible light component pixel in which mainly a non-visible light component has been captured, and that generates spectrally corrected images in which spectral characteristics of each pixel have been corrected; and
a contrast enhancement portion that performs contrast enhancement processing on one of the spectrally corrected images that has been generated by the spectral correction portion and that includes the non-visible light component, and that generates a non-visible light component image in which contrast has been enhanced.

(2)

The image processing device according to (1), further comprising:

an interpolation portion that performs interpolation processing on the mosaic image and generates an interpolated image in which a visible light component pixel value and a non-visible light component pixel value have been set for each pixel position,

wherein the spectral correction portion generates a spectrally corrected image in which the pixel values of the interpolated image that has been generated by the interpolation portion have been corrected.

(3)

The image processing device according to (2), wherein the spectral correction portion generates the spectrally corrected image in which the pixel values of the interpolated image that has been generated by the interpolation portion have been corrected, by performing a matrix computation that uses a spectral characteristics correction matrix.

(4)

The image processing device according to (3), wherein the spectral correction portion performs the matrix computation by computing the spectral characteristics correction matrix such that when an actual spectral characteristics matrix, whose elements are spectral transmittances that correspond to the spectral characteristics of an image capture device that captured the mosaic image, is multiplied by the spectral characteristics correction matrix, the resulting product will be closer to an ideal spectral characteristics matrix, whose elements are spectral transmittances that correspond to ideal spectral characteristics, than is the actual spectral characteristics matrix.

(5)

The image processing device according to any one of (1) to (4), wherein the contrast enhancement portion, with respect to the one of the spectrally corrected images that has been generated by the spectral correction portion and that includes the non-visible light component, performs processing that compresses a global luminance component and enhances a contrast component.

(6)

The image processing device according to any one of (1) to (5), wherein the contrast enhancement portion performs edge enhancement processing with respect to the one of the spectrally corrected images that has been generated by the spectral correction portion and that includes the non-visible light component.

(7)

The image processing device according to any one of (1) to (6), wherein the contrast enhancement portion, with respect to the one of the spectrally corrected images that has been generated by the spectral correction portion and that includes the non-visible light component, performs the contrast enhancement processing using a tone curve.

(8)

An image capture apparatus, comprising:

an image capture device that includes a single panel color image capture element that generates a mosaic image that is made up of a visible light component pixel in which mainly a visible light component has been captured and a non-visible light component pixel in which mainly a non-visible light component has been captured; a spectral correction portion that inputs the mosaic image that the image capture device has generated, and that generates spectrally corrected images in which spectral characteristics of each pixel have been corrected; and a contrast enhancement portion that performs contrast enhancement processing on one of the spectrally corrected images that has been generated by the spectral correction portion and that includes the non-visible light component, and that generates a non-visible light component image in which contrast has been enhanced.

Methods for the processing that is performed in the apparatus and the system that are described above, as well as a program that performs the processing, are also included in the configuration of the present disclosure.

A series of processes described in this specification can be executed by any of hardware, software, or both. When a process is executed by software, a program having a processing sequence recorded thereon can be executed by being installed on memory in a computer built in dedicated hardware, or executed by being installed on a general-purpose computer that can execute various processes. For example, the program can be recorded on a recording medium in advance. The program can be installed from the recording medium to the computer, or be received via a network such as a LAN (Local Area Network), or the Internet, and be installed on a recording medium such as built-in hardware.

Note that each of the processes described in the specification need not be executed in a time-series order in accordance with the description, and may be executed in parallel or individually in accordance with the processing capacity of the device that executes the process or according to need. In addition, the system in this specification is a logical collection configuration of a plurality of devices, and need not be the one in which a device with each configuration is accommodated within a single housing.

Industrial Applicability

As explained above, according to the configuration of the example of the present disclosure, a configuration is implemented that improves the spectral characteristics of the visible light and the non-visible light and that generates the non-visible light component image with only a small visible light component.

Specifically, a mosaic image is input that is made up of a visible light component image in which mainly the visible light component has been captured and a non-visible light component image in which mainly the non-visible light component has been captured, and spectrally corrected images are generated in which the spectral characteristics of each pixel have been corrected. Next, the contrast enhancement processing is performed on the generated spectrally corrected image that is made up of the non-visible light component, and the non-visible light component image is generated in which the contrast has been enhanced. The spectral correction portion 203 generates the spectrally corrected image by performing the matrix computation that uses the spectral characteristics correction matrix M that is generated using information on the ideal spectral characteristics.

This configuration makes it possible to generate the non-visible light component image with only a small visible light component and also makes it possible to perform higher precision processing in a configuration that uses the projecting of a light pattern that uses a non-visible light component such as infrared light or the like, for example, to measure the distance to a subject and the shape of the subject.

The present application contains subject matter related to that disclosed in Japanese Priority Patent Application JP 2011-108048 filed in the Japan Patent Office on May 13, 2011, the entire content of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An image processing device, comprising:

   a spectral correction portion that inputs a mosaic image that is made up of a visible light component pixel in which mainly a visible light component has been captured and a non-visible light component pixel in which mainly a non-visible light component has been captured, and that generates spectrally corrected images in which spectral characteristics of each pixel have been corrected; and
   a contrast enhancement portion that performs contrast enhancement processing on one of the spectrally corrected images that has been generated by the spectral correction portion and that includes the non-visible light component, and that generates a non-visible light component image in which contrast has been enhanced.

2. The image processing device according to claim 1, further comprising:

   an interpolation portion that performs interpolation processing on the mosaic image and generates an interpolated image in which a visible light component pixel value and a non-visible light component pixel value have been set for each pixel position,

wherein the spectral correction portion generates a spectrally corrected image in which the pixel values of the interpolated image that has been generated by the interpolation portion have been corrected.

3. The image processing device according to claim 2,
wherein the spectral correction portion generates the spectrally corrected image in which the pixel values of the interpolated image that has been generated by the interpolation portion have been corrected, by performing a matrix computation that uses a spectral characteristics correction matrix.

4. The image processing device according to claim 3,
wherein the spectral correction portion performs the matrix computation by computing the spectral characteristics correction matrix such that when an actual spectral characteristics matrix, whose elements are spectral transmittances that correspond to the spectral characteristics of an image capture device that captured the mosaic image, is multiplied by the spectral characteristics correction matrix, the resulting product will be closer to an ideal spectral characteristics matrix, whose elements are spectral transmittances that correspond to ideal spectral characteristics, than is the actual spectral characteristics matrix.

5. The image processing device according to claim 1,
wherein the contrast enhancement portion, with respect to the one of the spectrally corrected images that has been generated by the spectral correction portion and that includes the non-visible light component, performs processing that compresses a global luminance component and enhances a contrast component.

6. The image processing device according to claim 1,
wherein the contrast enhancement portion performs edge enhancement processing with respect to the one of the spectrally corrected images that has been generated by the spectral correction portion and that includes the non-visible light component.

7. The image processing device according to claim 1,
wherein the contrast enhancement portion, with respect to the one of the spectrally corrected images that has been generated by the spectral correction portion and that includes the non-visible light component, performs the contrast enhancement processing using a tone curve.

8. An image capture apparatus, comprising:

an image capture device that includes a single panel color image capture element that generates a mosaic image that is made up of a visible light component pixel in which mainly a visible light component has been captured and a non-visible light component pixel in which mainly a non-visible light component has been captured; and
an image processing device according to any preceding claims and having a spectral correction portion that inputs the mosaic image that the image capture device has generated, and that generates spectrally corrected images in which spectral characteristics of each pixel have been corrected; and
a contrast enhancement portion that performs contrast enhancement processing on one of the spectrally corrected images that has been generated by the spectral correction portion and that includes the non-visible light component, and that generates a non-visible light component image in which contrast has been enhanced.

9. An image processing method that is implemented in an image capture apparatus, comprising:

inputting a mosaic image that is made up of a visible light component pixel in which mainly a visible light component has been captured and a non-visible light component pixel in which mainly a non-visible light component has been captured, and generating spectrally corrected images in which spectral characteristics of each pixel have been corrected; and
performing contrast enhancement processing on one of the spectrally corrected images that has been generated and that includes the non-visible light component, and generating a non-visible light component image in which contrast has been enhanced.

10. A program that causes image processing to be performed in an image processing device, the program comprising:

inputting a mosaic image that is made up of a visible light component pixel in which mainly a visible light component has been captured and a non-visible light component pixel in which mainly a non-visible light component has been captured, and generating spectrally corrected images in which spectral characteristics of each pixel have been corrected; and

performing contrast enhancement processing on one of the spectrally corrected images that has been generated and that includes the non-visible light component, and generating a non-visible light component image in which contrast has been enhanced.

# FIG. 1

100: IMAGE CAPTURE APPARATUS

102 LIGHT EMITTING PORTION (Emitter)

10 SUBJECT (Object)

103

104

105 IMAGE CAPTURE DEVICE (CCD)

106 CDS

107 A/D

108 DSP

109 TG

111 CPU

110 MEMORY (Memory)

EP 2 523 160 A1

## FIG. 2

| R  | IR | R  | IR | R  | IR | R  |
|----|----|----|----|----|----|----|
| G  | B  | G  | B  | G  | B  | G  |
| R  | IR | R  | IR | R  | IR | R  |
| G  | B  | G  | B  | G  | B  | G  |
| R  | IR | R  | IR | R  | IR | R  |
| G  | B  | G  | B  | G  | B  | G  |
| R  | IR | R  | IR | R  | IR | R  |

FIG. 3

EP 2 523 160 A1

# FIG. 4

SPECTRAL TRANSMITTANCE (HIGH) / (LOW)

B PIXEL SPECTRUM

G PIXEL SPECTRUM

R PIXEL SPECTRUM

IR PIXEL SPECTRUM

WAVELENGTH

(SHORT WAVELENGTH) ← → (LONG WAVELENGTH)

EP 2 523 160 A1

FIG. 5

## FIG. 6

# FIG. 7

251 R PIXEL
252 IR PIXEL
P(x+0.5,y+0.5)
253 G PIXEL    254 B PIXEL

FIG. 8

402 — IR IMAGE (BEFORE PROCESSING)

403 — GLOBAL LUMINANCE COMPRESSION PORTION

404 — EDGE ENHANCEMENT PORTION

405 — IR IMAGE (AFTER PROCESSING)

406 — IR IMAGE (BEFORE PROCESSING)

204

FIG. 9

SPECTRAL
TRANSMITTANCE

(HIGH)

(LOW)

INPUT PIXEL VALUE

(LOW) ←————————→ (HIGH)

# FIG. 10

START

**PERFORM INTERPOLATION PROCESSING**

GENERATE IMAGE (RGBIR IMAGE) IN WHICH ALL COLOR COMPONENTS ARE SET IN EVERY PIXEL BY INTERPOLATION PROCESSING (DEMOSAICING) OF MOSAIC IMAGE THAT INCLUDES VISIBLE LIGHT COMPONENT PIXELS AND NON-VISIBLE LIGHT COMPONENT PIXELS — S101

**PERFORM SPECTRAL CORRECTION PROCESSING**

INPUT IMAGE (RGBIR IMAGE), AND GENERATE VISIBLE LIGHT COMPONENT IMAGE (RGB IMAGE) AND NON-VISIBLE LIGHT COMPONENT IMAGE (IR IMAGE) AS SPECTRALLY CORRECTED IMAGES THAT HAVE NEW SPECTRALLY CORRECTED PIXEL VALUES BY PERFORMING MATRIX COMPUTATIONS INDIVIDUALLY FOR EACH PIXEL VALUE FOR EACH COLOR (R, G, B, IR) AT EACH PIXEL POSITION — S102

**PERFORM CONTRAST ENHANCEMENT PROCESSING OF NON-VISIBLE LIGHT COMPONENT IMAGE**

INPUT NON-VISIBLE LIGHT COMPONENT IMAGE (IR IMAGE) GENERATED BY SPECTRAL CORRECTION PROCESSING, PERFORM PROCESSING THAT ENHANCES NON-VISIBLE LIGHT COMPONENT, AND GENERATE IR IMAGE IN WHICH VISIBLE LIGHT COMPONENT IS SUPPRESSED — S103

END

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HERTEL D ET AL: "A low-cost VIS-NIR true color night vision video system based on a wide dynamic range CMOS imager", INTELLIGENT VEHICLES SYMPOSIUM, 2009 IEEE, IEEE, PISCATAWAY, NJ, USA, 3 June 2009 (2009-06-03), pages 273-278, XP031489853, ISBN: 978-1-4244-3503-6 * pages 276-277 * | 1-10 | INV. G06T3/40 G06T5/00 |
| Y | US 2003/184659 A1 (SKOW MICHAEL [US]) 2 October 2003 (2003-10-02) * paragraph [0041] - paragraph [0057] * | 1,2,6, 8-10 | |
| Y | US 2007/053607 A1 (MITSUNAGA TOMOO [JP]) 8 March 2007 (2007-03-08) * paragraph [0068] - paragraph [0073] * | 1-5,7-10 | |
| A | US 2003/063185 A1 (BELL CYNTHIA S [US]) 3 April 2003 (2003-04-03) * the whole document * | 1-10 | |
| A | US 2002/041761 A1 (GLOTZBACH JOHN W [US] ET AL) 11 April 2002 (2002-04-11) * the whole document * | 1-10 | TECHNICAL FIELDS SEARCHED (IPC) G06T |

The present search report has been drawn up for all claims

| Place of search | Date of completion of the search | Examiner |
|---|---|---|
| Munich | 3 August 2012 | Rockinger, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 12 16 6897

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2012

| Patent document cited in search report | | Publication date | Patent family member(s) | | Publication date |
|---|---|---|---|---|---|
| US 2003184659 | A1 | 02-10-2003 | AU<br>US<br>WO | 2003220452 A1<br>2003184659 A1<br>03085963 A1 | 20-10-2003<br>02-10-2003<br>16-10-2003 |
| US 2007053607 | A1 | 08-03-2007 | JP<br>JP<br>US | 4687320 B2<br>2007049540 A<br>2007053607 A1 | 25-05-2011<br>22-02-2007<br>08-03-2007 |
| US 2003063185 | A1 | 03-04-2003 | NONE | | |
| US 2002041761 | A1 | 11-04-2002 | NONE | | |

EPO FORM P0459

For more details about this annex : see Official Journal of the European Patent Office, No. 12/82

**EP 2 523 160 A1**

## REFERENCES CITED IN THE DESCRIPTION

**Patent documents cited in the description**

- JP 2005258622 A
- JP 2003185412 A
- JP 2011108048 A